# EUROPEAN PATENT APPLICATION

(11) **EP 4 611 126 A1**
(43) Date of publication of application: **03.09.2025**
(21) Application number: 23898317.5
(22) Date of filing: 29.11.2023
(51) Int. Cl.: H01M 10/6556, H01M 50/516, H01M 50/204, H01M 10/613, H01M 50/533, H01M 50/519, H01M 10/6551

(54) **BATTERY PACK AND MANUFACTURING METHOD THEREFOR**

(30) Priority: 02.12.2022 KR 20220167136; 23.03.2023 KR 20230038228
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); JEON, Jong Pil, Daejeon 34122 (KR)
(74) Representative: Plasseraud IP
(86) International application number: PCT/KR2023/019489
(87) International publication number: WO 2024/117793

(57) **Abstract**

A battery pack may include a plurality of battery cells stacked in a first direction in a vertical coordinate system defined by the first direction, a second direction, and a third direction that are perpendicular to one another, and a pack case configured to accommodate the plurality of battery cells at an inner space therein. In addition, the pack case may include a pair of first outer walls extending in the first direction, a pair of second outer walls extending in the second direction, the pair of first outer walls and the pair of second outer walls defining the inner space of the pack case, a longitudinal beam provided between the pair of first outer walls and extending parallel to the pair of first outer walls, and a bottom part provided below the pair of first outer walls, the pair of second outer walls, and the longitudinal beam.

## Description

### [Technical Field]

The present invention relates to a battery pack and a manufacturing method thereof, and more particularly, to a battery pack in which heat generated internally is quickly removed to control an increase in internal temperature and improve safety and a manufacturing method thereof.

This application claims the benefit of priority based on Korean Patent Application No. 10-2022-0167136, filed on December 2, 2022 and Korean Patent Application No. 10-2023-0038228, filed on March 23, 2023, and the entire contents of these Korean patent applications are incorporated herein by reference.

### [Background Art]

With the advancement of technology for various types of mobile devices, electric vehicles, energy storage systems (ESSs), etc. and an increasing demand therefor, interest and demand for secondary batteries as energy sources are increasing sharply. In the past, nickel cadmium batteries or nickel hydrogen batteries were frequently used as secondary batteries. However, recently, lithium secondary batteries have been frequently used, because they hardly undergo the memory effect compared to nickel-based secondary batteries and thus are freely charged and discharged and have very low self-discharge rates and high energy density.

Generally, in such a lithium secondary battery, a lithium-based oxide and a carbon material are used as a positive electrode active material and a negative electrode active material, respectively. The lithium secondary battery includes: an electrode assembly in which a positive electrode plate coated with the positive electrode active material and a negative electrode plate coated with the negative electrode active material are disposed while a separator is interposed therebetween; and an exterior, i.e., a battery case, for sealing and accommodating the electrode assembly together with an electrolyte.

Recently, battery packs have been widely used to drive medium and large-sized devices, such as electric vehicles and energy storage systems, or store energy therefor. In a battery pack of the related art, one or more battery modules and a control unit, e.g., a battery management system (BMS), for controlling charging and discharging of the battery pack are included in a pack case. Here, the one or more battery modules are each configured to include a plurality of battery cells inside a module case. That is, a battery pack of the related art is formed by accommodating a plurality of battery cells (secondary batteries) in a module case to form each battery module and accommodating at least one such battery module in a pack case.

In particular, pouch-type batteries have advantages in various aspects, e.g., they are light in weight and a dead space is small when they are stacked, but are vulnerable to external impact and assemblability thereof is somewhat low. Therefore, generally, a battery pack is manufactured by modularizing multiple cells first and accommodating the multiple cells inside a pack case. As a representative example, a battery pack of the related art is formed by accommodating a plurality of pouch-type battery cells in a module case to form a battery module and accommodating at least one such battery module in a pack case.

However, such a battery pack of the related art may be disadvantageous in terms of energy density. Typically, when a plurality of battery cells are modularized by accommodating them in a module case, the volume of the battery pack may unnecessarily increase or a space to be occupied by the battery cells may decrease due to various components such as a module case or stack frames. Furthermore, a space for accommodation of the battery cells may be reduced to ensure assembly tolerance for such components, as well as a space occupied by components such as the module case or the stack frames. Therefore, in the case of battery packs of the related art, there may be limitations in increasing energy density.

In addition, battery packs of the related art may be disadvantageous in terms of assemblability. In particular, in order to manufacture a battery pack, a battery module is configured by modularizing a plurality of battery cells and thereafter is accommodated in a pack case, thus complicating a manufacturing process of the battery pack. Moreover, as disclosed in the above-described related art documents, a process of forming a cell stack using stack frames, bolts, plates, etc. and a structure of the cell stack may be very complicated.

### [Disclosure]

### [Technical Problem]

A first technical aspect of the present invention is directed to providing a battery pack in which heat generated internally is quickly removed to control an increase in internal temperature and improve safety.

A second technical aspect of the present invention is directed to providing a manufacturing method of a battery pack in which heat generated internally is quickly removed to control an increase in internal temperature and improve safety.

### [Technical Solution]

According to an embodiment of the present invention, a battery pack may include a plurality of battery cells stacked in a first direction in a vertical coordinate system defined by the first direction, a second direction, and a third direction that are perpendicular to one another, and a pack case configured to accommodate the plurality of battery cells at an inner space therein, in which the pack case includes a pair of first outer walls extending in the first direction, a pair of second outer walls extending in the second direction, the pair of first outer walls and the pair of second outer walls defining the inner space of the pack case, a longitudinal beam provided between the pair of first outer walls and extending parallel to the pair of first outer walls, and a bottom part provided below the pair of first outer walls, the pair of second outer walls, and the longitudinal beam. A wiring structure is provided on the longitudinal beam to be electrically connected to the plurality of battery cells, and a heat sink is provided in the longitudinal beam.

In some embodiments, the heat sink may include a passage that extends in the first direction, the passage being configured to include a cooling fluid.

In some embodiments, the battery pack may further include an additional heat sink may be provided in the bottom part of the pack case below the plurality of battery cells.

In some embodiments, the heat sink may not be provided in the bottom part of the pack case below the longitudinal beam.

In some embodiments, each of the plurality of battery cells may include an electrode assembly, a cover surrounding the electrode assembly, and a cell lead protruding from one side of the cover to an upper part of the longitudinal beam in the second direction.

In some embodiments, the cell lead may include a first part and a second part, the first part being located closer to the cover than the second part, in which a maximum dimension of the second part may be greater than a maximum dimension of the first part in the first direction, and the second part may be a plane perpendicular to the third direction.

In some embodiments, the wiring structure may include a wiring board extending along an upper surface of the longitudinal beam, and a bus bar coupled to the wiring board, and the second part may be coupled to the bus bar by welding in the third direction.

In some embodiments, each of the pair of first outer walls may include an outer wall body extending in the first direction, and a mesa part protruding from the outer wall body toward adjacent battery cells of the plurality of battery cells, and an additional heat sink extending in the first direction may be further provided in the mesa part.

In some embodiments, an upper surface of the mesa part may be lower than an upper surface of the outer wall body, and may be substantially level with an upper surface of the longitudinal beam.

In some embodiments, the battery pack may further include another wiring structure on the upper surface of the mesa part.

In some embodiments, the heat sink may not be located in the bottom part of the pack case below the mesa part.

According to another embodiment of the present invention provided is a manufacturing method of a battery pack, the manufacturing method may include disposing a plurality of battery cells directly in a pack case in a vertical coordinate system defined by a first direction, a second direction, and a third directions that are perpendicular to one another, and electrically connecting cell leads protruding in the second direction from at least two adjacent battery cells among the plurality of battery cells using a bus bar, in which the electrically connecting of the cell leads using the bus bar includes connecting each of the cell leads to the bus bar by welding in the third direction. In this case, the pack case may include a pair of first outer walls extending in the first direction, a pair of second outer walls extending in the second direction, the pair of first outer walls and the pair of second outer walls defining an inner space of the pack case, a longitudinal beam provided between the pair of first outer walls, the longitudinal beam extending parallel to the pair of first outer walls, and a bottom part provided below the pair of first outer walls, the pair of second outer walls, and the longitudinal beam, a wiring structure may be provided on the longitudinal beam to be electrically connected to the plurality of battery cells, and a heat sink may be provided in the longitudinal beam.

In some embodiments, an additional heat sink may be provided in the bottom part below the plurality of battery cells and may not be provided in the bottom part below the longitudinal beam.

In some embodiments, each of the plurality of battery cells may include an electrode assembly, a cover surrounding the electrode assembly, and a cell lead protruding in the second direction from a side of the cover. The first cell lead may include a first part and a second part, the first part of the cell lead being disposed closer to the cover than the second part of the cell lead, in which a maximum dimension of the second part may be greater than a maximum dimension of the first part in the first direction, and the second part may include a plane perpendicular to the third direction. The wiring structure may include a wiring board extending along an upper surface of the longitudinal beam, and the bus bar coupled to the wiring board.

In some embodiments, each of the pair of first outer walls may include an outer wall body extending in the first direction, and a mesa part protruding from the outer wall body toward adjacent battery cells of the plurality of battery cells, and an additional heat sink extending in the first direction may be provided in the mesa part.

### [Advantageous Effects]

In a battery pack of the present invention, heat generated internally can be quickly removed to control an increase in internal temperature and improve safety.

### [Brief Description of the Drawings]

FIG. 1 is an exploded perspective view of a main part a battery pack according to an embodiment of the present invention.
FIG. 2 is a perspective view of a main part of a lower case of a pack case according to an embodiment of the present invention.
FIG. 3 is a cross-sectional side view illustrating a main part of the battery pack of FIG. 1 taken along line III-III'.
FIG. 4 is a perspective view of a main part of a battery cell according to an embodiment of the present invention.
FIG. 5 is a partially enlarged view of a part of a battery cell, including a cell lead part of the battery cell, according to an embodiment of the present invention.
FIG. 6 is a partially enlarged view of the part of the battery cell, including the cell lead part of the battery cell, when viewed in an x-axis direction.
FIG. 7 is a partially enlarged view of the part of the battery cell, including the cell lead part of the battery cell, when viewed in a y-axis direction.
FIG. 8 is a partially enlarged view of the part of the battery cell, including the cell lead part of the battery cell, when viewed in a z-axis direction.
FIG. 9 is a perspective view of a pair of adjacent battery cells electrically connected to each other by a bus bar.
FIG. 10 is a cross-sectional view of second parts and a bus bar of FIG. 9 taken along line X-X'.
FIG. 11 is a cross-sectional side view of a main part of a battery pack according to another embodiment of the present invention.
FIG. 12 is a flowchart of a manufacturing method of a battery pack according to an embodiment of the present invention.
FIGS. 13A and 13B are perspective views illustrating a manufacturing method of a battery pack according to an embodiment of the present invention.

### [Best Mode]

Hereinafter, embodiments of the concept of the present invention will be described in detail with reference to the accompanying drawings. However, embodiments of the concept of the present invention may be embodied in many different forms and thus the scope of the present invention should not be interpreted as being limited by the embodiments described below. It should be understood that the embodiments of the concept of the present invention are provided to more completely describe the concept of the present invention to those of ordinary knowledge in the art. The same reference numerals denote the same elements throughout the specification. Furthermore, in the drawings, various elements and areas are shown schematically. Therefore, the concept of the present invention is not limited by the relative sizes of elements or the intervals therebetween shown in the accompanying drawings.

Terms such as first and second may be used to describe various components but the components are not limited by the terms. These terms are used only for the purpose of distinguishing one component from another. For example, a first component may be referred to as a second component without departing from the scope of the present invention, and similarly, the second component may be referred to as the first component.

The terms used in this application are only used to describe certain embodiments and are not intended to limit the concept of the present invention. As used herein, the singular expressions are intended to include plural forms as well, unless the context clearly dictates otherwise. It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof.

Unless otherwise defined, all terms (including technical and scientific terms) used herein have the same meaning as commonly understood by one of ordinary skill in the technical field to which the concept of the present invention pertains. In addition, terms commonly used and defined in dictionaries should be interpreted as having a meaning consistent with the context of the related art and should not be interpreted in an overly formal sense unless explicitly defined herein.

When an embodiment may be implemented differently, certain operations may be performed in an order different from that described below. For example, two operations described consecutively may be performed substantially concurrently or in an order reverse to that described below.

It will be expected that the shapes of components illustrated in the accompanying drawings may vary, for example, according to manufacturing technology and/or tolerances. Therefore, embodiments of the present invention should not be construed as being limited by a specific shape of each region illustrated in the present specification but should be understood to cover, for example, a change in the shape of each region, caused during a manufacture process. As used herein, the term "and/or" includes any and all combinations of one or more of the associated listed items. The term "substrate" used herein should be understood to mean a substrate or a stacked structure including the substrate and layers, films, etc. that are formed on a surface of the substrate. In addition, the expression "surface of the substrate" used herein should be understood to mean an exposed surface of the substrate or an outer surface of a layer or film formed on the substrate.

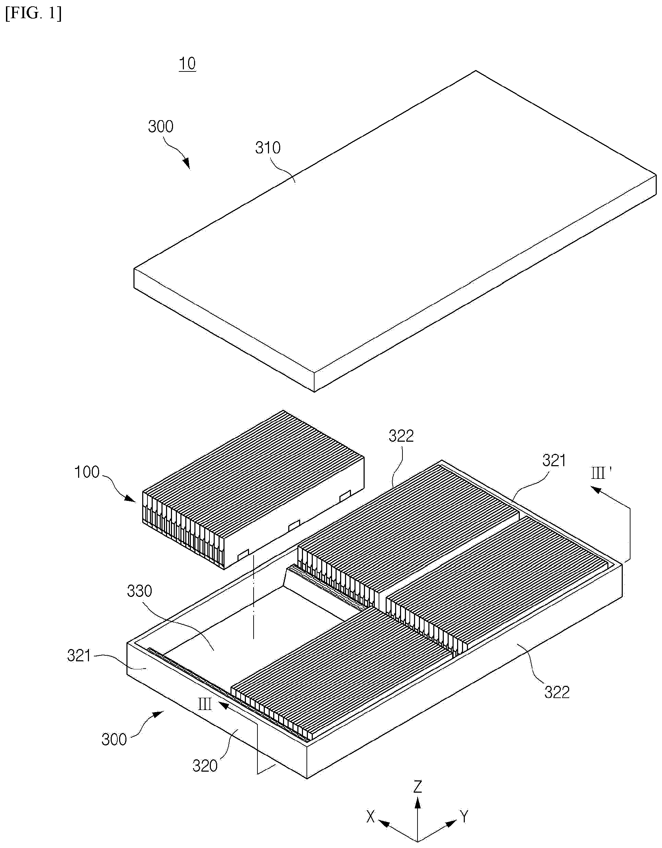

FIG. 1 is an exploded perspective view of a main part of a battery pack 10 according to an embodiment of the present invention. FIG. 1 illustrates that the battery pack 10 is defined in a vertical coordinate system defined by a first direction along an x-axis, a second direction along a y-axis, and a third direction along a z-axis that are perpendicular to one another, but the first, second and third directions are not particularly limited, provided that they are relatively perpendicular to one another.

Referring to FIG. 1, the battery pack 10 includes a plurality of battery cells 100 stacked in the first direction (e.g., an x-axis direction) and a pack case 300 accommodating the plurality of battery cells 100 therein.

The pack case 300 includes an inner space 330 for accommodating the plurality of battery cells 100. In some embodiments, the pack case 300 may include an upper case 310 and a lower case 320 that define the inner space 330.

Although not explicitly shown in FIG. 1, conducting wires may be embedded in the pack case 300 to electrically connect the plurality of battery cells 100 to an external electrical load.

In some embodiments, the lower case 320 may have a box shape whose upper end is open, and multiple battery cells 100 may be accommodated in the inner space 330. The upper case 310 may be in the form of a cover to cover the open upper end of the lower case 320. In some embodiments, the upper case 310 may be in the form of a box whose lower end is open.

The pack case 300 may include a plastic or metal material. In addition, one of various exterior materials of battery packs publicly known at the time of filing the present invention may be employed as a material of the pack case 300.

The battery pack 10 may further include a battery management system (BMS). The BMS may be mounted in the inner space 330 of the pack case 300, and configured to control overall operations of the battery cells 100 such as a charging/discharging operation, a data transmission/reception operation, etc. The BMS may be provided in units of packs rather than in units of modules. More specifically, the BMS may be configured to control a charged/discharged state, a power state, a performance state, etc. of the battery cell 100, based on a pack voltage and a pack current.

The battery pack 10 may further include a battery disconnect unit (BDU). The BDU may be configured to control electrical connection between battery cells to manage a power capacity and functions of the battery pack 10. To this end, the BDU may include a power relay, a current sensor, a fuse, etc. Similarly, the BDU is a component provided in units of packs rather than in units of modules, and various types of disconnection units publicly known at the time of filing the present invention may be employed as the BDU.

The battery pack 10 may further include components of various types of battery packs publicly known at the time of filing the present invention. For example, according to an embodiment of the present invention, the battery pack 10 may further include a manual service disconnector (MSD) to cut off power by manually separating a service plug by a worker.

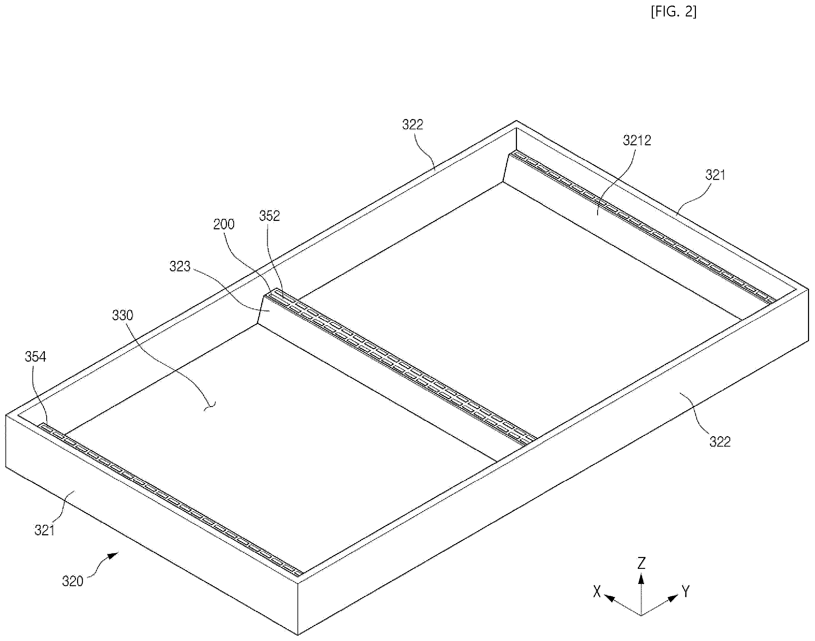

FIG. 2 is a perspective view of a main part of a lower case 320 of a pack case 300 according to an embodiment of the present invention.

Referring to FIG. 2, the lower case 320 includes a pair of first outer walls 321 extending in the first direction (e.g., the x-axis direction). The lower case 320 further includes a pair of second outer walls 322 extending in the second direction (e.g., the y-axis direction) and defining the inner space 330 of the pack case 300 together with the pair of first outer walls 321. In some embodiments, the first outer walls 321 and the second outer walls 322 may be integrally formed.

The lower case 320 further includes a longitudinal beam 323 extending between the pair of first outer walls 321 to be parallel to the pair of first outer walls 321. The longitudinal beam 323 may extend in the first direction (e.g., the x-axis direction) to meet the pair of second outer walls 322. In some embodiments, the longitudinal beam 323 may be integrally formed with the second outer walls 322.

In some embodiments, the longitudinal beam 323 may have a mesa structure. In some embodiments, an upper surface of the longitudinal beam 323 may be lower than those of the second outer walls 322. In some embodiments, side walls of the longitudinal beam 323 may extend obliquely downward with respect to the upper surface thereof. In some other embodiments, the side walls of the longitudinal beam 323 may extend perpendicular to the upper surface thereof. In some embodiments, the side walls of the longitudinal beam 323 may be configured to correspond to an edge shape of a battery cell 100 adjacent thereto.

The longitudinal beam 323 may define the inner space 330 for accommodation of the battery cells 100 (see FIG. 1), together with an adjacent first outer wall 321 among the first outer walls 321.

In some embodiments, the lower case 320 may include two or more longitudinal beams 323. In some embodiments, the pack case 300 may include two or more longitudinal beams 323. When the lower case 320 includes two or more longitudinal beams 323, two adjacent longitudinal beams 323 may define an inner space for accommodation of the battery cells 100 (see FIG. 1).

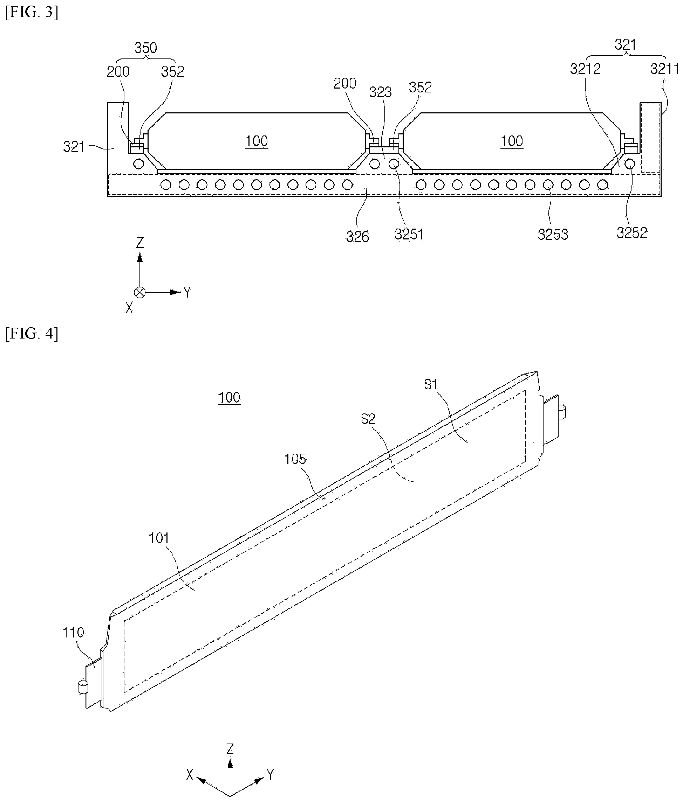

FIG. 3 is a side cross-sectional view illustrating a main part of the battery pack 10 of FIG. 1 taken along line III-III'.

Referring to FIGS. 2 and 3, each of the pair of first outer walls 321 may include an outer wall body 3211 extending in the first direction (e.g., the x-axis direction) and a main body 3212 protruding from the outer wall body 3211 toward battery cells 100 adjacent to the outer wall body 3211.

The mesa part 3212 may extend in the first direction (e.g., the x-axis direction) to meet the pair of second outer walls 322. In some embodiments, the mesa part 3212 may be integrally formed with the outer wall body 3211 and/or the second outer walls 322.

An upper surface of the mesa part 3212 may be lower than those of the second outer walls 322. In some embodiments, the upper surface of the mesa part 3212 may be coplanar with that of the longitudinal beam 323. In some embodiments, a width of the upper surface of the mesa part 3212 may be less than that of the upper surface of the longitudinal beam 323.

In some embodiments, side walls of the mesa part 3212 may extend obliquely downward with respect to the upper surface thereof. In some other embodiments, the side walls of the mesa part 3212 may extend vertically with respect to the upper surface thereof. In some embodiments, the side walls of the mesa part 3212 may be configured to correspond to the edge shape of a battery cell 100 adjacent thereto.

A wiring structure 350 may be provided on the cupper surface of the longitudinal beam 323. The wiring structure 350 may be a structure electrically connecting the battery cells 100. In some embodiments, the wiring structure 350 may include a wiring board 352 extending along the longitudinal beam 323 in the first direction (e.g., the x-axis direction). The wiring board 352 may include an insulating layer and conductive lines formed on the insulating layer.

In some embodiments, the wiring structure 350 may further include bus bars 200 on the wiring board 352.

The bus bar 200 may be a conductor that electrically connects two adjacent battery cells 100 in the first direction (e.g., the x-axis direction), as described in more detail below.

A heat sink 3251 penetrating the longitudinal beam 323 in the first direction (e.g., the x-axis direction) may be provided in the longitudinal beam 323. The heat sink 3251 may be, for example, a passage of a cooling fluid extending in the first direction (e.g., the x-axis direction). The cooling fluid may be a liquid, a gas, or a mixture thereof. For example, the cooling fluid may be water, air, alcohol, nitrogen, or the like but is not limited thereto.

As illustrated in FIG. 3, on the longitudinal beam 323, cell leads 110 of the battery cells 100 are coupled to a bus bar 200, and a large amount of heat is generated at an interface between the cell leads 110 and the bus bar 200 during an operation of the battery pack 10. Therefore, the heat sink 3251 penetrating the inside of the longitudinal beam 323 may quickly remove the large amount of generated heat, thereby controlling an increase in temperature of the battery pack 10 and improving the safety of the battery pack 10.

The heat sink 3251 may be connected to a cooling fluid reservoir outside the pack case 300 for communication of a fluid. In some embodiments, the cooling fluid reservoir may be configured to cool a fluid stored therein.

In some embodiments, a wiring structure 350 may also be provided on the upper surface of the mesa part 3212 of each of the first outer walls 321. The wiring structure 350 on the mesa part 3212 may also include a wiring board 352 and bus bars 200.

A heat sink 3252 penetrating the mesa part 3212 in the first direction (e.g., the x-axis direction) may be provided in the mesa part 3212. The heat sink 3252 may be, for example, a passage of a cooling fluid extending in the first direction (e.g., the x-axis direction). The cooling fluid may be a liquid, a gas, or a mixture thereof. For example, the cooling fluid may be water, air, alcohol, nitrogen, or the like but is not limited thereto.

In some embodiments, on the mesa part 3212, the cell leads 110 of the battery cells 100 are coupled to a bus bar 200, and a large amount of heat is generated at an interface between the cell leads 110 and the bus bar 200 during an operation of the battery pack 10. Therefore, the heat sink 3252 penetrating the inside of the mesa part 3212 may quickly remove the large amount of generated heat, thereby controlling an increase in temperature of the battery pack 10 and improving the safety of the battery pack 10.

The heat sink 3252 may be connected to a cooling fluid reservoir outside the pack case 300 for communication of a fluid. In some embodiments, the cooling fluid reservoir may be configured to cool a fluid stored therein.

The lower case 320 further includes a bottom part 326. The bottom part 326 is provided under the pair of first outer walls 321, the pair of second outer walls 322, and the longitudinal beam 323. In some embodiments, the bottom part 326 may be integrally formed with at least one of the pair of first outer walls 321, the pair of second outer walls 322, or the longitudinal beam 323.

In some embodiments, an additional heat sink 3253 may be further provided in the bottom part 326 below the battery cells 100. The additional heat sink 3253 may be, for example, a passage of a cooling fluid extending in the first direction (e.g., the x-axis direction). The cooling fluid may be a liquid, a gas, or a mixture thereof. For example, the cooling fluid may be water, air, alcohol, nitrogen, or the like but is not limited thereto.

Because the additional heat sink 3253 quickly removes heat generated during the charging or discharging of the battery cells 100, an increase in the temperature of the battery pack 10 can be controlled and the safety of the battery pack 10 can be improved.

In some embodiments, no heat sink may be provided in the bottom part 326 below the longitudinal beam 323. In some embodiments, no heat sink may be provided in the bottom part 326 below the mesa part 3212.

FIG. 4 is a perspective view of a main part of a battery cell 100 according to an embodiment of the present invention.

Referring to FIG. 4, the battery cell 100 includes an electrode assembly 101, a cover 105 surrounding the electrode assembly 101, and a cell lead 110 protruding from one side of the cover 105 in the second direction (e.g., the y-axis direction).

In some embodiments, the battery cell 100 may be a pouch type battery cell but the present invention is not limited thereto. In some embodiments, the battery cell 100 may be a prismatic battery cell.

In some embodiments, the battery cell 100 includes a thin plate-shaped body and may have a structure of a pouch cell. The pouch cell may have a structure in which a positive electrode, a separator, and a negative electrode are alternately stacked to form the electrode assembly 101, and an electrode tab is drawn from at least one side of the electrode assembly 101 and connected to the cell lead 110. The positive electrode and the negative electrode may be prepared by coating at least one surface of a current collector with a slurry such as an electrode active material, a binder resin, a conductive agent, or other additives. As the electrode active material, a general positive electrode active material such as a lithium-containing transition metal oxide may be used in the case of the positive electrode, and a general negative electrode active material, such as a lithium metal, a carbon material, a metal compound, or a mixture thereof that occludes and releases lithium ions, may be used in the case of the negative electrode. A general porous polymer film for use in a lithium secondary battery may be employed as the separator.

A general electrolyte for a lithium secondary battery may be employed as an electrolyte accommodated in the cover 105 together with the electrode assembly 101. The cover 105 is formed of a sheet material and includes a receiving part for accommodating the electrode assembly 101. The cover 105 is formed by combining a first case and a second case that are formed by processing the sheet material into certain shapes. The sheet material of the cover 105 has a multilayer structure, in which an outermost resin layer formed of an insulating material such as polyethylene terephthalate (PET) or nylon, a metal layer formed of aluminum to maintain mechanical strength and prevent the permeation of moisture and oxygen, and an inner resin layer that is formed of a polyolefin-based material with thermal adhesion and thus serves as a sealing material are stacked.

In the sheet material of the cover 105, an adhesive resin layer may be interposed between the inner resin layer and the metal layer and between the outermost resin layer and the metal layer as necessary. The adhesive resin layer is formed in a single layer or multiple layers for smooth adhesion between different types of materials, and as a material of the adhesive resin layer, a polyolefin-based resin may be generally used, a polyurethane resin may be used for smooth processing, or a mixture thereof may be used.

As shown in FIG. 4, the battery cell 100 includes two main surfaces S1 and S2 perpendicular to the first direction (e.g., the x-axis direction). That is, the battery cell 100 may include a first main surface S1 and a second main surface S2 that extend along an yz plane of FIG. 4 and that are parallel to each other.

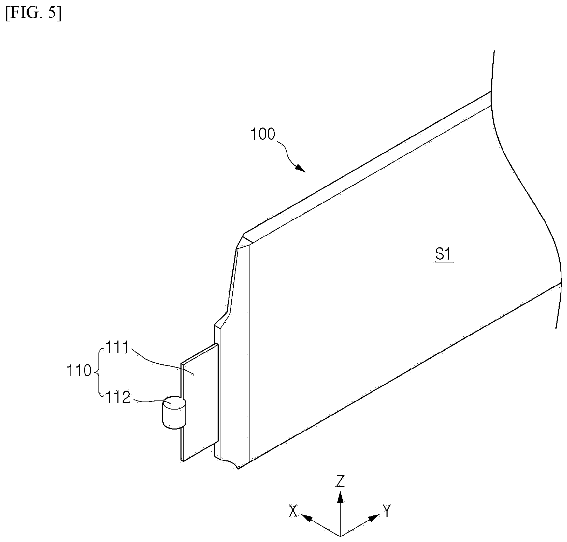

FIG. 5 is a partially enlarged view of a part of a battery cell 100, including a cell lead part 110 of the battery cell 100, according to an embodiment of the present invention.

Referring to FIG. 5, the cell lead 110 protrudes from one side of the cover 105 in the second direction (e.g., the y-axis direction) and includes a first part 111 and a second part 112. The first part 111 may be located closer to the cover 105 than the second part 112. The second part 112 may be a foremost end of the cell lead 110 in the second direction.

The first part 111 and the second part 112 may be electrically connected to each other. In some embodiments, the first part 111 and the second part 112 may be in direct contact with each other but the present invention is not limited thereto. In some embodiments, the first part 111 and the second part 112 may be integrally formed.

In some embodiments, the first part 111 may have a flat plate shape having a plane substantially perpendicular to the first direction (e.g., the x-axis direction) as a main plane. In some embodiments, the second part 112 may be configured as a plane perpendicular to the third direction (e.g., the z-axis direction). Here, the configuring of the second part 112 as the plane perpendicular to the third direction should be understood to mean that an upper surface and lower surface of the second part 112 are perpendicular to the third direction and are not provided with through-holes. In some embodiments, the upper and lower surfaces of the second part 112 may be perpendicular to the third direction and may not be provided with through-holes. In some embodiments, the upper and lower surfaces of the second part 112 may be perpendicular to the third direction and may be provided with through-holes.

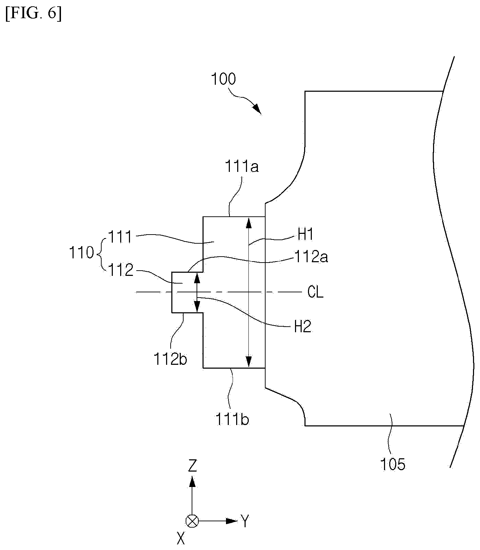

FIG. 6 is a partially enlarged view of the part of the battery cell 100, including the cell lead part 100 of the battery cell, when viewed in the x-axis direction.

Referring to FIG. 6, the first part 111 of the cell lead 110 includes a first upper surface 111a and a first lower surface 111b. The second part 112 of the cell lead 110 includes a second upper surface 112a and a second lower surface 112b. Here, the "upper surface" and the "lower surface" are relative concepts, and thus, a surface at a relatively high position and a surface at a relatively low position may be respectively defined as the "upper surface" and the "low surface" or one of surfaces may be defined as the "upper surface" and the other surface may be defined as the "low surface".

A center line CL may be defined with respect to the first part 111. The center line CL is a straight line in the second direction (e.g., the y-axis direction) that divides the first part 111 into halves in the third direction (e.g., the z-axis direction).

In the third direction, the center line CL may be positioned between the second upper surface 112a and the second lower surface 112b of the second part 112.

In the third direction, the first part 111 has a first dimension H1, and the second part 112 has a second dimension H2 less than the first dimension H1. The second dimension H2 may be, for example, about 0.5% to about 50% of the first dimension H1. In some embodiments, the second dimension H2 may be about 0.5% to about 50%, about 1% to about 48%, about 1.5% to about 45%, about 2% to about 43%, about 2.5% to about 40%, about 3% to about 38%, about 3.5% to about 35%, about 4% to about 33%, about 4.5% to about 30%, about 5% to about 28%, about 5.5% to about 25%, about 6% to about 23%, about 6.5% to about 20%, about 7% to about 18%, 7.5% to about 15%, about 8% to about 13%, or about 8.5% to about 10% of the first dimension H1, or may be in a range between two numerical values among these numerical values.

When the second dimension H2 is extremely small compared to the first dimension H1, the mechanical strength of the second part 112 may be insufficient and thus be easily damaged. When the second dimension H2 is extremely large compared to the first dimension H1, the weight of the battery cell 100 may increase unnecessarily.

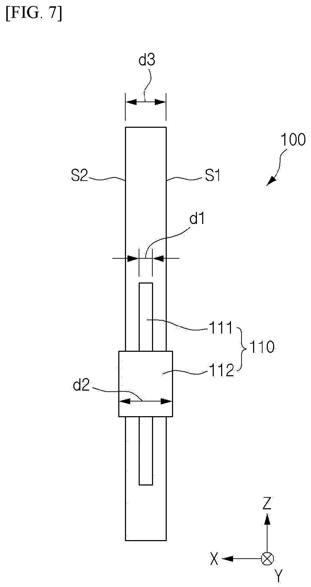

FIG. 7 is a partially enlarged view of the part of the battery cell 100, including the cell lead part 100 of the battery cell, when viewed in the y-axis direction.

Referring to FIG. 7, in the first direction (e.g., the x-axis direction), the first part 111 of the cell lead 110 has a first maximum dimension d1, and the second part 112 of the cell lead 110 has a second maximum dimension d2. The second maximum dimension d2 is greater than the first maximum dimension d1. For example, the second maximum dimension d2 may be about twice to about 20 times the first maximum dimension d1. In some embodiments, the second maximum dimension d2 may be about twice to about 20 times, about 2.5 times to about 19.5 times, about 3 times to about 19 times, about 3.5 times to about 18.5 times, about 4 times to about 18 times, about 4.5 times to about 17.5 times, about 5 times to about 17 times, about 5.5 times to about 16.5 times, about 6 times to about 16 times, about 6.5 times to about 15.5 times, about 7 times to about 15 times, about 7.5 times to about 14.5 times, about 8 times to about 14 times, about 8.5 times to about 13.5 times, about 9 times to about 13 times, about 9.5 times to about 12.5 times, about 10 times to about 12 times, or about 10.5 times to about 11.5 times the first maximum dimension d1, or may be in a range between two numerical values among these numerical values.

When the second maximum dimension d2 is extremely small compared to the first maximum dimension d1, it may not be easy to weld a bus bar, which will be described below, and the second part 112 together. When the second maximum dimension d2 is extremely large compared to the first maximum dimension d1, a thickness of the battery cell 100 in the first direction (e.g., the x-axis direction) may increase excessively, thus resulting in a reduction of energy density.

In some embodiments, the second maximum dimension d2 of the second part 112 in the first direction (e.g., the x-axis direction) may be greater than a cell thickness d3 defined between the first main surface S1 and the second main surface S2 of the battery cell 100. In some other embodiments, the second maximum dimension d2 of the second part 112 in the first direction (e.g., the x-axis direction) may be smaller than the cell thickness d3 defined between the first and second main surfaces S1 and S2 of the battery cell 100.

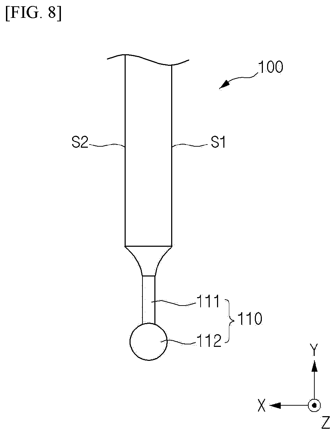

FIG. 8 is a partially enlarged view of the part of the battery cell 100, including the cell lead part 100 of the battery cell, when viewed in the z-axis direction.

Referring to FIG. 8, a projection of the second part 112 on a plane (e.g., an xy plane) perpendicular to the third direction (e.g., the z-axis direction) may have a circular shape. In some embodiments, the projection of the second part 112 on the xy plane may have an elliptic shape, a polygonal shape (e.g., a quadrangular shape, a pentagonal shape or a hexagonal shape) or any other shapes, as well as the circular shape. However, the projection may have the circular shape in terms of diversity of welding methods to be used to weld the second part 112 together with a bus bar afterwards, structural stability, easiness in handling, etc.

In some embodiments, when the projection has the circular shape, the second part 112 may have a cylindrical or conical shape. When the projection has the polygonal shape, the second part 112 may have a polyprism or polypyramid shape.

An area of the projection of the second part 112 may be about twice to about 20 times that of a projection of the first part 111. In some embodiments, the area of the projection of the second part 112 may be about twice to about 20 times, about 2.5 times to about 19 times, about 3 times to about 18 times, about 3.5 times to about 17 times, about 4 times to about 16 times, about 4.5 times to about 15 times, about 5 times to about 14 times, about 5.5 times to about 13 times, about 6 times to about 12 times, about 6.5 times to about 11 times, about 7 times to about 10 times, or about 7.5 times to about 9 times the area of the projection of the first part 111, or may be in a range between two numerical values among these numerical values.

When the area of the projection of the second part 112 is extremely small compared to the area of the projection of the first part 111, it may not be easy to weld the second part 112 and a bus bar to be described below. When the area of the projection of the second part 112 is extremely large compared to the area of the projection of the first part 111, the weight of the battery cell 100 may increase unnecessarily.

Second parts 112 of the cell leads 110 of the battery cells 100 each have a planar shape perpendicular to the third direction (e.g., the z-axis direction) and thus the battery cells 100 may be electrically connected to each other after being coupled to the pack case 300. Accordingly, battery packs according to embodiments of the present invention can be manufactured at low costs due to a small number of components, are highly productive, and are not likely to malfunction.

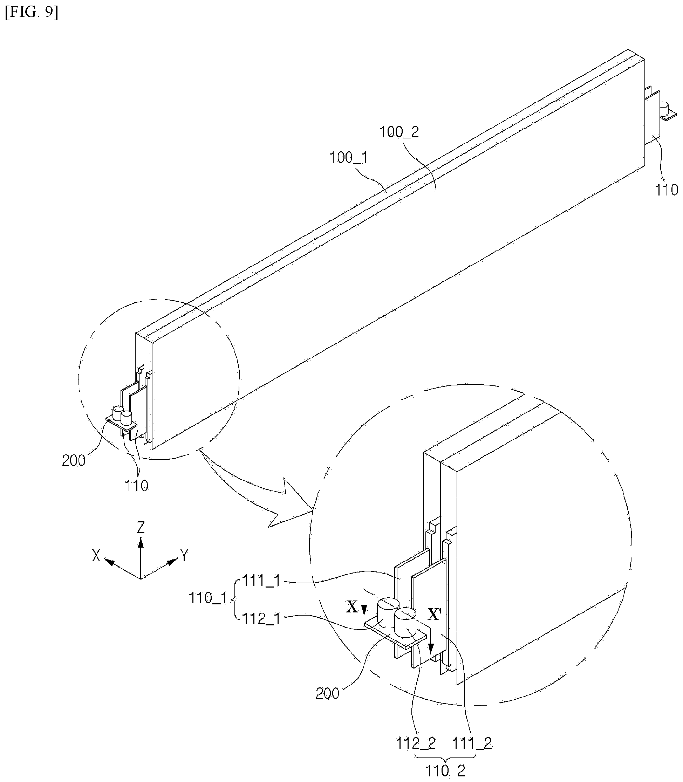

FIG. 9 is a perspective view of a pair of adjacent battery cells 100_1 and 100_2 electrically connected to each other by a bus bar 200.

Referring to FIG. 9, a cell lead 110_1 of the first battery cell 100_1 includes a first part 111_1 and a second part 112_1, and a cell lead 110_2 of the second battery cell 100_2 includes a first part 111_2 and a second part 112_2.

The cell lead 110_1 of the first battery cell 100_1 and the cell lead 110_2 of the second battery cell 100_2 may be electrically connected to each other by the bus bar 200. Specifically, the second part 112_1 of the first battery cell 100_1 and the second part 112_2 of the second battery cell 100_2 may be electrically connected to each other by the bus bar 200.

The cell lead 110_1 of the first battery cell 100_1 and the cell lead 110_2 of the second battery cell 100_2 electrically connected to each other by the bus bar 200 may have the same polarity or different polarities.

The bus bar 200 may be disposed to extend in the first direction (e.g., the x-axis direction), and configured to be in contact with a lower surface of the second part 112_1 of the first battery cell 100_1 and a lower surface of the second part 112_2 of the second battery cell 100_2. In some embodiments, the bus bar 200 may be in the form of a strip extending in the first direction. In this case, a flat surface of the bus bar 200 may face the second part 112_1 of the first battery cell 100_1 and the second part 112_2 of the second battery cell 100_2 in the third direction (e.g., the z-axis direction).

As described above with reference to FIGS. 2 and 3, the bus bar 200 may be provided on the wiring board 352 disposed on the longitudinal beam 323. In some embodiments, the bus bar 200 may be provided on the wiring board 352 disposed on the mesa part 3212 as described above with reference to FIGS. 2 and 3.

The cell lead 110_1 of the first battery cell 100_1 and the cell lead 110_2 of the second battery cell 100_2 may extend to the upper part of the longitudinal beam 323. Specifically, the cell lead 110_1 of the first battery cell 100_1 and the cell lead 110_2 of the second battery cell 100_2 may be electrically connected to the bus bar 200 on the longitudinal beam 323.

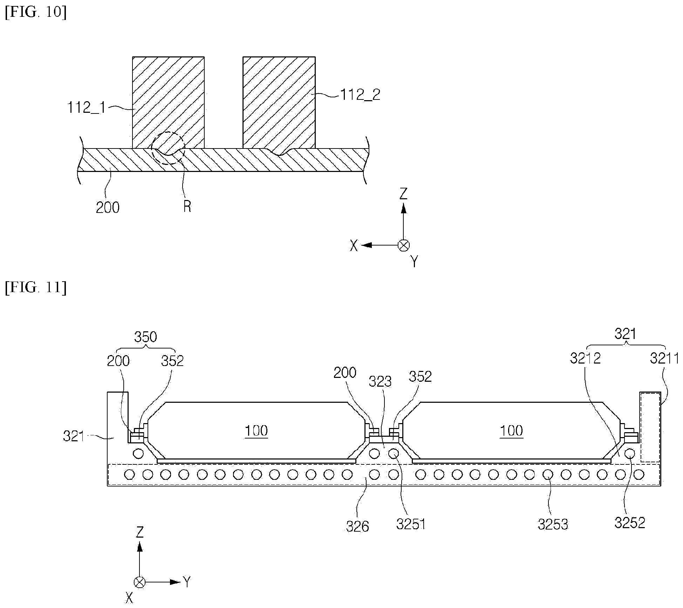

FIG. 10 is a cross-sectional view of the second parts 112_1 and 112_2 and a bus bar 200 of FIG.9 taken along line X-X'.

Referring to FIG. 10, portions of the bus bar 200 overlapping the second parts 112_1 and 112_2 may have recesses R that are concave in the third direction (e.g., the z-axis direction). In some embodiments, the recesses R may be generated as a result of welding the bus bar 200 and the second parts 112_1 and 112_2 in the third direction. However, the recesses R are results generated as interfaces between the bus bar 200 and the second parts 112_1 and 112_2 are partially melted and coagulated by welding and thus may appear as traces of melting and coagulation in some cases.

FIG. 10 illustrates that the recesses R are consecutively formed in the flat surface of the bus bar 200 but in some cases, slightly uplifted parts may be formed around the recesses R.

In some embodiments, the recesses R may not be identified as clear interfaces according to a welding method.

FIG. 11 is a cross-sectional side view of a main part of a battery pack 10 according to another embodiment of the present invention.

Referring to FIG. 11, in some embodiments, an additional heat sink may be provided in the bottom part 326 below the longitudinal beam 323. In some embodiments, an additional heat sink may be provided in the bottom part 326 below the mesa part 3212. By providing an additional heat sink (heat sinks) as described above, heat generated at a point at which the cell lead and the busbar 200 are coupled can be removed more quickly.

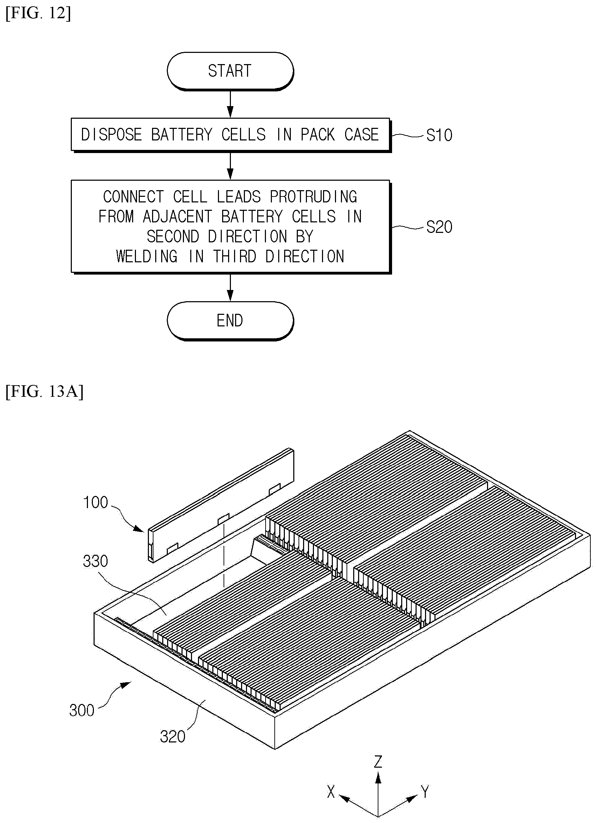

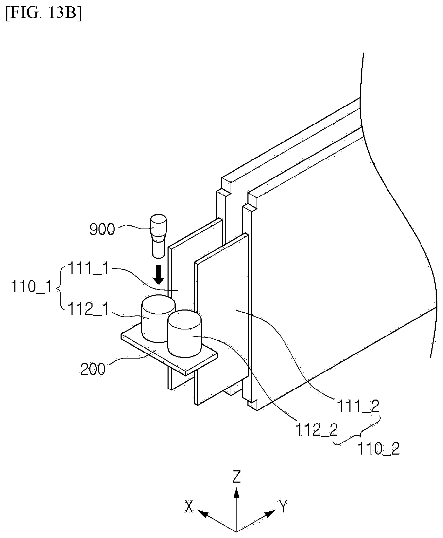

FIG. 12 is a flowchart of a manufacturing method of a battery pack 10 according to an embodiment of the present invention. FIGS. 13A and 13B are perspective views illustrating a manufacturing method of the battery pack 10 according to an embodiment of the present invention.

Referring to FIGS. 12 and 13A, a plurality of battery cells 100 may be directly disposed in a pack case 300 (S10). Here, the disposing of the plurality of battery cells 100 directly in the pack case 300 should be understood as disposing the plurality of battery cells 100 in the pack case 300 without modularizing the plurality of battery cells 100.

In some embodiments, the plurality of battery cells 100 may be disposed in the pack case 300 individually one by one. In some other embodiments, two or more of the plurality of battery cells 100 may be stacked and then disposed in the pack case 300.

A method of disposing the battery cells 100 in the pack case 300 is not particularly limited, and the battery cells 100 may be disposed in the pack case 300 by any of known methods. A configuration of the lower case 320 has been described above with reference to FIGS. 2 and 3 and thus a detailed description thereof is omitted here. A configuration of each of the battery cells 100 has been described above in detail with reference to FIGS. 4 to 10 and thus a detailed description thereof is omitted here.

Referring to FIGS. 12 and 13B, cell leads 110_1 and 110_2 protruding from two adjacent battery cells 100 in the second direction (e.g., the y-axis direction) may be electrically connected to a bus bar 200 (S20). The cell leads 110_1 and 110_2 may be connected to the bus bar 200 by welding in the third direction (e.g., the z-axis direction).

In some embodiments, the bus bar 200 may be disposed in the pack case 300 before the plurality of battery cells 100 are disposed in the pack case 300. In some embodiments, the bus bar 200 may be disposed on the cell leads 110_1 and 110_2 after the plurality of battery cells 100 are disposed in the pack case 300. Thereafter, the bus bar 200 may be welded together with the cell leads 110_1 and 110_2. A welding method may be any of known methods and is not particularly limited.

Second parts 112 of the cell leads 110 of the battery cells 100 each have a planar shape perpendicular to the third direction (e.g., the z-axis direction) and thus the battery cells 100 may be electrically connected to each other after being coupled to the pack case 300. Accordingly, battery packs according to embodiments of the present invention can be manufactured at low costs due to a small number of components, are highly productive, and are not likely to malfunction.

Although the embodiments of the present invention have been described above in detail, the present invention may be implemented in many different forms by those of ordinary skill in the art, to which the present invention pertains, without departing from the spirit and scope of the present invention defined in the appended claims. Therefore, it should be understood that all modifications in embodiments of the present invention fall within the scope of the present invention.

## Claims

1. A battery pack comprising:
a plurality of battery cells stacked in a first direction in a vertical coordinate system defined by the first direction, a second direction, and a third direction that are perpendicular to one another; and
a pack case configured to accommodate the plurality of battery cells at an inner space therein,
wherein the pack case comprises:
a pair of first outer walls extending in the first direction;
a pair of second outer walls extending in the second direction, the pair of first outer walls and the pair of second outer walls defining the inner space of the pack case;
a longitudinal beam provided between the pair of first outer walls and extending parallel to the pair of first outer walls; and
a bottom part provided below the pair of first outer walls, the pair of second outer walls, and the longitudinal beam,
wherein a wiring structure is provided on the longitudinal beam to be electrically connected to the plurality of battery cells, and
wherein a heat sink is provided in the longitudinal beam.

2. The battery pack of claim 1, wherein the heat sink comprises a passage that extends in the first direction, the passage being configured to include a cooling fluid.

3. The battery pack of claim 2, further comprising an additional heat sink provided in the bottom part of the pack case below the plurality of battery cells.

4. The battery pack of claim 3, wherein the heat sink is not provided in the bottom part of the pack case below the longitudinal beam.

5. The battery pack of claim 1, wherein each of the plurality of battery cells comprises an electrode assembly, a cover surrounding the electrode assembly, and a cell lead protruding in the second direction from one side of the cover to an upper part of the longitudinal beam.

6. The battery pack of claim 5, wherein the cell lead comprises a first part and a second part, the first part being located closer to the cover than the second part,
wherein a maximum dimension of the second part is greater than a maximum dimension of the first part in the first direction, and
wherein the second part comprises a plane perpendicular to the third direction.

7. The battery pack of claim 5, wherein the wiring structure comprises:
a wiring board extending along an upper surface of the longitudinal beam; and
a bus bar coupled to the wiring board, and
wherein the second part is coupled to the bus bar by welding in the third direction.

8. The battery pack of claim 1, wherein each of the pair of first outer walls comprises:
an outer wall body extending in the first direction; and
a mesa part protruding from the outer wall body toward adjacent battery cells of the plurality of battery cells, and
wherein an additional heat sink extending in the first direction is further provided in the mesa part.

9. The battery pack of claim 8, wherein an upper surface of the mesa part is lower than an upper surface of the outer wall body, and is substantially level with an upper surface of the longitudinal beam.

10. The battery pack of claim 8, further comprising an additional wiring structure on the upper surface of the mesa part.

11. The battery pack of claim 8, wherein the heat sink is not provided in the bottom part of the pack case below the mesa part.

12. A manufacturing method of manufacturing a battery pack, the manufacturing method comprising:
disposing a plurality of battery cells directly in a pack case in a vertical coordinate system defined by a first direction, a second direction, and a third directions that are perpendicular to one another; and
electrically connecting cell leads protruding in the second direction from at least two adjacent battery cells among the plurality of battery cells using a bus bar,
wherein the electrically connecting of the cell leads using the bus bar comprises connecting each of the cell leads to the bus bar by welding in the third direction,
wherein the pack case comprises:
a pair of first outer walls extending in the first direction;
a pair of second outer walls extending in the second direction, the pair of first outer walls and the pair of second outer walls defining an inner space of the pack case;
a longitudinal beam provided between the pair of first outer walls and extending parallel to the pair of first outer walls; and
a bottom part provided below the pair of first outer walls, the pair of second outer walls, and the longitudinal beam,
wherein a wiring structure is provided on the longitudinal beam to be electrically connected to the plurality of battery cells, and
wherein a heat sink is provided in the longitudinal beam.

13. The manufacturing method of claim 12, wherein an additional heat sink is provided in the bottom part below the plurality of battery cells, and
wherein the additional heat sink is not provided in the bottom part below the longitudinal beam.

14. The manufacturing method of claim 12, wherein each of the plurality of battery cells comprises an electrode assembly, a cover surrounding the electrode assembly, and a cell lead protruding in the second direction from a side of the cover,
wherein the cell lead comprises a first part and a second part, the first part being disposed closer to the cover than the second part,
wherein a maximum dimension of the second part is greater than a maximum dimension of the first part in the first direction,
wherein the second part comprises a plane perpendicular to the third direction, and
wherein the wiring structure comprises:
a wiring board extending along an upper surface of the longitudinal beam; and
the bus bar coupled to the wiring board.

15. The manufacturing method of claim 14, wherein each of the pair of first outer walls comprises:
an outer wall body extending in the first direction; and
a mesa part protruding from the outer wall body toward adjacent battery cells of the plurality of battery cells, and
wherein an additional heat sink extending in the first direction is provided in the mesa part.
